(19) Europäisches Patentamt
European Patent Office
Office européen des brevets

(11) Publication number: **0 171 189 A2**

# (12) EUROPEAN PATENT APPLICATION

(21) Application number: **85304835.3**

(22) Date of filing: **05.07.85**

(51) Int. Cl.[4]: **C 08 F 220/12**, C 10 M 149/06 // (C08F220/12, 222:00), (C10M149/06, 145:14), (C10N30/02, 30:04)

(30) Priority: **09.07.84 US 629143**

(43) Date of publication of application: **12.02.86 Bulletin 86/7**

(84) Designated Contracting States: **BE DE FR GB IT NL SE**

(71) Applicant: **TEXACO DEVELOPMENT CORPORATION, 2000 Westchester Avenue, White Plains New York 10650 (US)**

(72) Inventor: **Hart, William Pius, 60 No. Lockey Woods Road Apt. 25, Beacon, NY 12508 (US)**

(74) Representative: **Brock, Peter William et al, Michael Burnside & Partners 2 Serjeants' Inn Fleet Street, London EC4Y 1HL (GB)**

## (54) Polymer composition and lubricating oil containing said composition as pour depressant.

(57) Copolymers suitable as pour depressants for lubricating compositions comprises

(A) 50 to 80 mol% od acrylic ester units having the formula

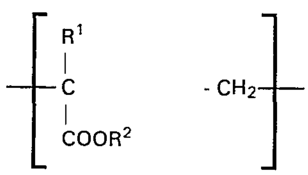

wherein $R_3$ is alkyl, aralkyl, alkaryl, cycloalkyl, or aryl and $R^1$ is hydrogen or is selected from the same group as $R^2$; and

(B) 5 to 40 mol% of dicarboxylic units having the formula

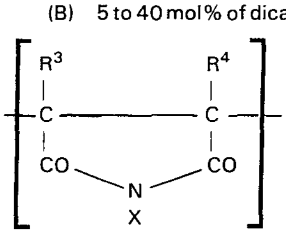

or

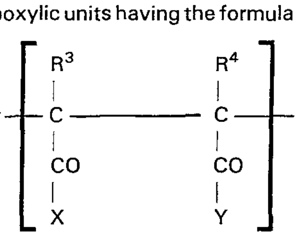

wherein

X is $-R^5(NR^5)_aN(R^6)_2$ or $-(R^7)N(NR^5)_aN(R^6)_2$;

Y is X or -OH or $O^-$;

$R^3$ and $R^4$ and $R^6$ and $R^7$ are each hydrogen or selected from same group as $R^2$;

$R^5$ is alkylene, aralkylene, cycloalkylene, alkarylene, or arylene; and

a is 1 to 20.

Preferably supplemental monomer units (A') can be incorporated having the same formula as units (A), but wherein $R^2$ has at least two carbon atoms more than the corresponding group in units (A).

0171189

# POLYMER COMPOSITION AND LUBRICATING OIL CONTAINING SAID COMPOSITION AS POUR DEPRESSANT

This invention relates to lubricating oils. More particularly it relates to lubricating oils containing additives which impart improved properties.

As is well known to those skilled in the art, lubricating oils are characterized by a variety of properties including viscosity, viscosity index, pour point, dispersancy, etc; and as improvements are made in the design of engines, there is a constant struggle to improve the properties of lubricating oils in order to meet the ever-increasing standards.

It is an object of this invention to provide a novel lubricating oil system. Other objects will be apparent to those skilled in the art.

In accordance with certain of its aspects, this invention is directed to a novel polymer consisting essentially of

(A) 50-80 mole % of acrylic ester units, derived from first monomer, having the formula

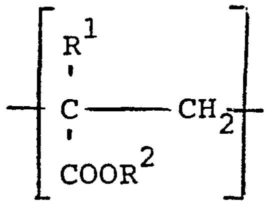

wherein $R^2$ is a hydrocarbon group selected from the group consisting of alkyl, aralkyl, alkaryl, cycloalkyl, and aryl hydrocarbon groups and $R^1$ is hydrogen or selected from the same group as $R^2$; and

(B) 5-40 mole % of dicarboxylic units, derived from second monomer, having the formula

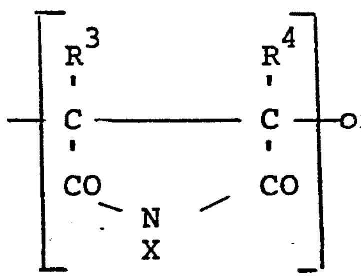

or

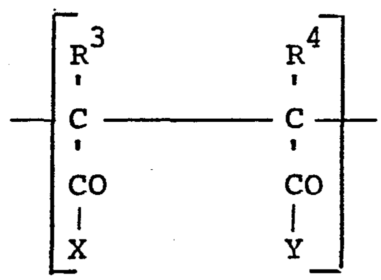

wherein X is $-R^5(NR^5)_a\ N(R^6)_2$ or $-(R^7)\ N(NR^5)_a\ N(R^6)_2$;

Y is X or -OH or $O^-$

$R^3$ and $R^4$ and $R^6$ and $R^7$ are hydrogen or selected from the same group as $R^2$;

$R^5$ is a divalent hydrocarbon group selected from the group consisting of alkylene, aralkylene, cycloalkylene, alkarylene, and arylene; and

<u>a</u> is 1-20.

The polymer composition of this invention may be prepared from a first monomer having the formula

$$CH_2 = \overset{R^1}{\overset{|}{C}} - COOR^2$$

In the above formula, $R^2$ may be a hydrocarbon group selected from the group consisting of alkyl, aralkyl, cycloalkyl, aryl, and alkaryl, including such radicals when inertly substituted. When $R^2$ is alkyl, it may typically be methyl, ethyl, n-propyl, iso-propyl, n-butyl, i-butyl, sec-butyl, amyl, octyl, decyl, octadecyl, etc. When $R^2$ is aralkyl, it may typically be benzyl, beta-phenylethyl, etc. When $R^2$ is cycloalkyl, it may typically be cyclohexyl, cycloheptyl, cyclooctyl, 2-methylcycloheptyl, 3-butylcyclohexyl, 3-methylcyclohexyl, etc. When $R^2$ is aryl, it may typically be phenyl, naphthyl, etc. When $R^2$ is alkaryl, it may typically be tolyl, xylyl, etc. $R^2$ may be inertly substituted i.e. it may bear a non-reactive substituent such as alkyl, aryl, cycloalkyl, ether, etc. Typically inertly substituted $R^2$ groups may include 2-ethoxyethyl, carboethoxymethyl, 4-methylcyclohexyl, etc. The preferred $R^2$ groups may be alkyl, more preferably $C_1$-$C_{30}$ alkyl, groups including eg methyl, ethyl, n-propyl, i-propyl, butyls, amyls, hexyls, octyls, decyls, etc. $R^2$ may preferably be lauryl ($C_{12}$).

$R^1$ may be hydrogen or selected from the group from which $R^2$ is selected. $R^1$ is preferably hydrogen or methyl.

Typical first monomers which may be employed in practice of the process of this invention may include the following:

TABLE

| | |
|---|---|
| lauryl | acrylate |
| lauryl | methacrylate |
| lauryl | ethacrylate |
| myristyl | acrylate |

myristyl methacrylate
cetyl acrylate
cetyl methacrylate
stearyl acrylate
stearyl methacrylate
methyl acrylate
ethyl methacrylate
methyl methacrylate, etc.

Preferred as a first monomer is lauryl methacrylate.

It is a feature of this invention that it is possible to use a supplemental first monomer which is selected from the same group as the first monomer is selected. Preferably the supplemental first monomer may have (in the $R^2$ portion of the molecule derived from the alcohol) at least one more (and preferably at least two more) carbon atoms than are possessed by the $R^2$ group of the first monomer. The first monomer is preferably characterized by the presence of 10-16 carbon atoms in the alcohol moiety and the supplemental first monomer is preferably characterized by 12-18 carbon atoms in the alcohol moiety.

It is possible in practice of the process of this invention to utilize pure monomers or commercially available monomers which contain several monomer species.

In a preferred embodiment, the first monomer may be lauryl ($C_{12}$) methacrylate and the supplemental first monomer may be stearyl ($_{18}$) methacrylate.

The second monomer may be characterized as a dicarboxylic monomer preferably derived from a maleic acid anhydride nucleus, and it may be characterized by the formula

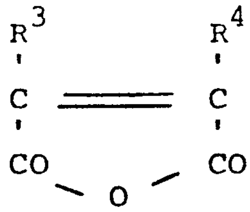

In the above formula, $R^3$ or $R^4$ may be hydrogen or a hydrocarbon group selected from the group consisting of alkyl, aralkyl, cycloalkyl, aryl, and alkaryl, including such radicals when inertly substituted. When $R^3$ or $R^4$ is alkyl, it may typically be methyl, ethyl, n-propyl, iso-propyl, n-butyl, i-butyl, sec-butyl, amyl, octyl, decyl, octadecyl, etc. When $R^3$ or $R^4$ is aralkyl, it may typically be benzyl, beta-phenylethyl, etc. When $R^3$ or $R^4$ is cycloalkyl, it may typically be cyclohexyl, cycloheptyl, cyclooctyl, 2-methylcyclo-heptyl, 3-butylcyclohexyl, 3-methylcyclohexyl, etc., When $R^3$ or $R^4$ is alkaryl, it may typically be tolyl, xylyl, etc. $R^3$ or $R^4$ may be inertly substituted i.e. it may bear a non-reactive substituent such as alkyl, aryl, cycloalkyl, ether, etc. Typically inertly substituted $R^3$ or $R^4$ groups may include 2-ethoxyethyl, carboethoxymethyl, 4-methycyclohexyl, etc. The preferred $R^3$ or $R^4$ groups may be hydrogen or lower alkyl, i.e. $C_1$-$C_{10}$ alkyl, groups including eg methyl, ethyl, n-propyl, i-propyl, butyls, amyls, hexyls, octyls, decyls, etc. $R^3$ or $R^4$ may preferably be hydrogen.

Second monomers which may be employed may include the following:

TABLE

maleic acid anhydride
methyl maleic acid anhydride
phenyl maleic acid anhydride
ethyl maleic acid anhydride
dimethyl maleic acid anhydride

The preferred second monomer may be maleic acid anhydride.

Copolymerization of the first monomer, the optional supplemental first monomer, and the second monomer may be effected by adding to the reaction mixture, the following molar proportions:

TABLE

| Component | Broad | Preferred | Typical |
|---|---|---|---|
| First Monomer | 50-80 | 70-80 | 80 |
| Supplemental First Monomer | 9-15 | 12-15 | 14.5 |
| Second Monomer | 5-40 | 5-10 | 5.5 |

Polymerization may be carried out in the presence of 5-20 parts, say 9 parts of inert polymerization solvent (per 100 parts of total reactants) typified by hydrocarbon such as lubricating oils (preferably the lubricating oil in which the polymer is to be incorporated), standard API oils typified by the well-known 145 P Pale Turbine Stock, or other common polymerization solvents. Hydrocarbon solvents including typically $C_6$-$C_{20}$ liquids may be useful polymerization solvents. There may also be present 20-70, say 40 parts of diluent oil, such as SNO-7 oil or 100 E Pale Oil - to achieve the final composition.

Preferably polymerization is effected under inert atmosphere, typically nitrogen, preferably at atmospheric pressure and in the presence of 0.01 - 0.2 w%, say 0.08 w%, of a free-radical initiator such as azobisisobutyronitrile, benzoyl peroxide etc. Also present may be 0.1-1.0 w%, preferably 0.05-0.5, say 0.25 w% of chain transfer agent

typically lauryl mercaptan. Polymerization occurs at 40°C-150°C, preferably 40°C-100°C, say about 80°C over 1-6 hours, say 3.5 hours.

Reaction is monitored by refractive index; and it may be considered complete when two consecutive refractive indices are identical - typically about 3.5 hours. Then additional initiator, 0.005-0.02 parts, say 0.01 parts may be added together with 20-70 parts, say 40 parts of additional diluent. The reaction mixture may then be heated to 60°C-160°C, say 100°C at atmospheric pressure for 0.5-2 hours, say 1 hour followed by cooling to room temperature.

The following reaction may occur:

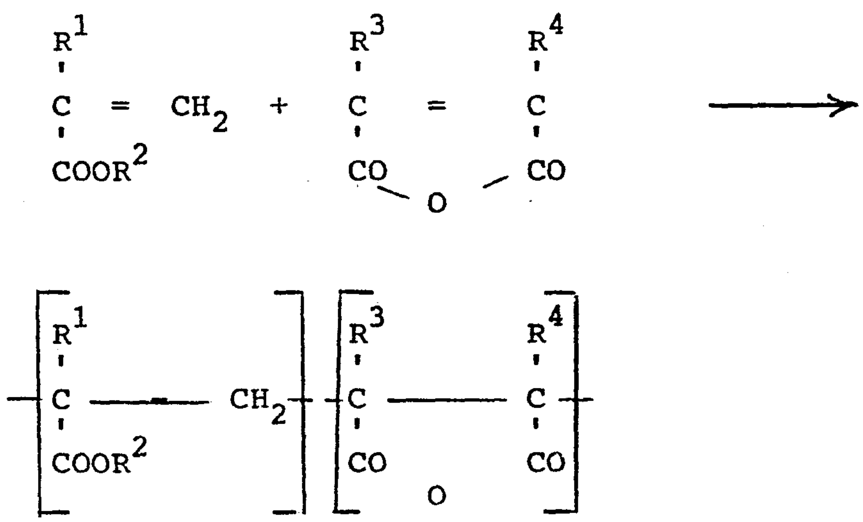

More particularly, when supplemental first monomer is present, the reaction may be:

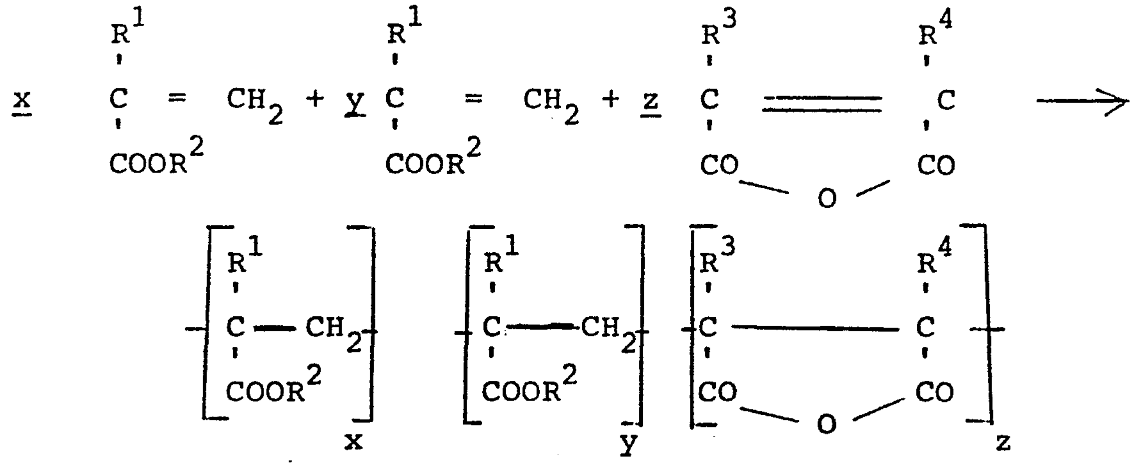

wherein x (representing the number of moles derived from first monomer) may be 340-560, say 552 and y representing the number of moles derived from supplemental first monomer) maybe 70-110, say 104 and z (representing the number of moles derived from second monomer may be 20-280, say 35.

In the case of one preferred embodiment, the reaction may be as follows:

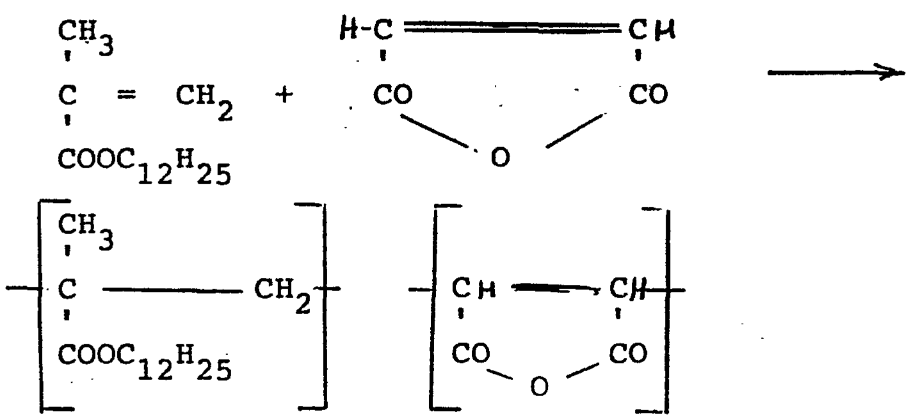

Analysis of the product indicates a molecular weight $\bar{M}_n$ of 20,000-200,000, preferably 40,000-100,000, say about 80,000. Infrared analysis show carbonyl stretching frequencies of 1730 $cm^{-1}$ (ester) and 1790 $cm^{-1}$ (anhydride).

Functionalization of the so-prepared polymer may be effected on the product so prepared without further work-up. The polymer may be reacted with amine

$$(R^7)_2\ NR^5\ (NR^5)_a\ N(R^6)_2$$

In the above formula, $R^5$ may be a hydrocarbon group consisting of alkylene, aralkylene, cycloalkylene, arylene, and alkarylene, including such radicals when inertly substituted. When $R^5$ is alkylene, it may typically be methylene, ethylene, n-propylene, iso-propylene, n-butylene, i-butylene, sec-butylene, amylene, octylene, decylene, octadecylene, etc. When $R^5$ is aralkylene, it may typically be benzylene, beta-phenylethylene, etc. When $R^5$ is cycloalkylene, it may typically be cyclohexylene, cycloheptylene, cyclooctylene, 2-methylcycloheptylene, 3-butylcyclohexylene, 3-methylcyclohexylene, etc. When $R^5$ is arylene, it may typically be phenylene, napthylene, etc. When $R^5$ is alkarylene, it may typically be tolylene, xylylene, etc. $R^5$ may be inertly substituted i.e. it may bear a non-reactive substituent such as alkyl, aryl, cycloalkyl, ether, nitrogen etc. Typically inertly substituted $R^5$ groups may include 3-chloropropylene, 2-ethoxyethylene, carboethoxymethylen, 4-methylcyclohexylene, p-chlorophenylene, p-chlorobenzylene, 3-chloro-5-methylphenylene, etc. The preferred $R^5$ groups may be lower alkylene, i.e. $C_1$-$C_{10}$ alkylene, group including eg methylene, ethylene, n-propylene, i-propylene, butylene, amylene, hexylene, octylene, decylene, etc. $R^5$ may preferably be propylene-$CH_2$-$CH_2$-$CH_2$.

In the above formula, $R^6$ may be hydrogen or a hydrocarbon group selected from the group consisting of alkyl, aralkyl, cycloalkyl, aryl, and alkaryl,

including such radicals when inertly substituted. When $R^6$ is alkyl, it may typically be methyl, ethyl, n-propyl, iso-propyl, n-butyl, i-butyl, sec-butyl, amyl, octyl, decyl, octadecyl, etc. When $R^6$ is aralkyl, it may typically be benzyl, beta-phenylethyl, etc. When $R^6$ is cycloalkyl, it may typically be cyclohexyl, cycloheptyl, cyclooctyl, 2-methylcyclo-heptyl, 3-butylcyclohexyl, 3-methylcyclohexyl, etc. When $R^6$ is aryl, it may typically be phenyl, naphthyl, etc. When $R^6$ is aryl, it may typically be phenyl, naphthyl, etc. When $R^6$ is alkaryl, it may typically be tolyl, xylyl, etc. $R^6$ may be inertly substituted i.e. it may bear a non-reactive substituent such as alkyl, aryl, cycloalkyl, ether, etc. Typically inertly substituted $R^6$ groups may include 2-ethoxyethyl, carboethoxymethyl, 4-methylcyclohexyl, etc. The preferred $R^6$ groups may be hydrogen or lower alkyl, i.e. $C_1$-$C_{10}$ alkyl, groups including eg methyl, ethyl, n-propyl, i-propyl, butyls, amyls, hexyls, octyls, decyls, etc. $R^6$ may preferably be hydrogen. At least one of the $R^6$ groups must be hydrogen.

$R^7$ may be selected from the same groups as that from which $R^6$ is selected.

<u>a</u> may be 0-20, preferably 0-6, say 0.

Typical of the amines which may be employed may be the following:

<u>TABLE</u>

ethylenediamine
diethylenetriamine
triethylenetetramine
tetraethylenepentamine
,3-(N,N-dimethylamino)propylamine

Preferred of the above amines is 3-(N,N-dimethylamino)propylamine.

Derivatization or functionalization may be carried out by adding the amine to the polymer (preferably dissolved in inert diluent-solvent as recovered from the copolymerization reaction) in the reaction vessel, preferably in an inert (eg nitrogen) atmosphere. The amine is added in amount corresponding to 1.0-18, say about 3 moles per mole of dicarboxylic acid moieties in the polymer.

The temperature is raised to 80°C-200°C, say 160°C and maintained at that level for 1-4 hours, say about 2.5 hours. Thereafter the temperature is raised to 150°C-200°C, say about 180°C for 1-8 hours, say 3 hours. At the end of this time, the reaction mixture is cooled.

The reaction may be as follows (showing only the reactant dicarboxylic acid moiety)

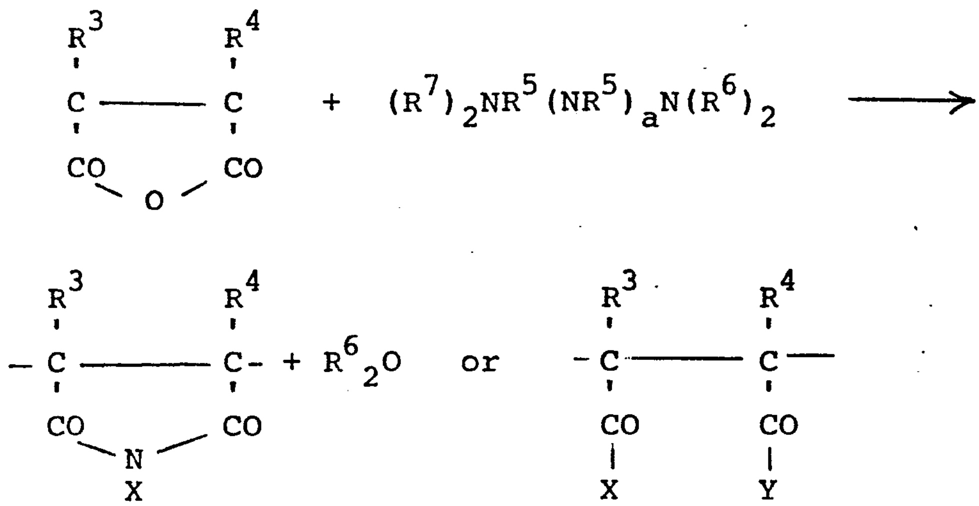

or

wherein X is - $R^5(NR^5)_aN(R^6)_2$ or-$(R^7)N(NR^5)_aN(R^6)_2$ and Y is -OH or -X or $O^-$.

In a typical embodiment, the reaction may be

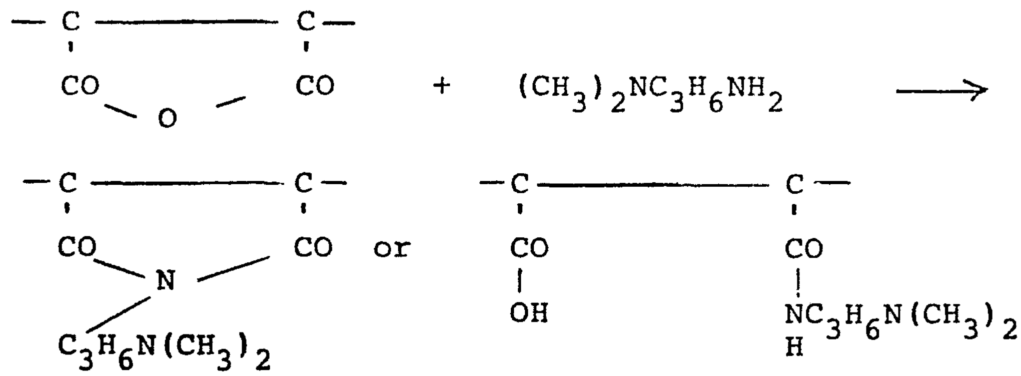

or

Analysis of the product so prepared shows loss of anhydride carbonyl stretch at 1790 $cm^{-1}$; ester carbonyl stretching at 1730 $cm^{-1}$ is retained.

The product so prepared is typically a solution containing 25-80 w%, say 50 w% of functionalized copolymer in inert diluent-solvent. In preferred operation, it may be employed as so prepared with no further work up. For convenience of handling if desired it may be diluted to a concentration of 10-50 w%, say 20 w% by addition of additional diluent-solvent which may be the same as that employed in the reaction - or it may be a lubricating oil cut such as that in which the product may be formulated.

It is a feature of this invention that the polymer product so prepared may be added in minor effective portion to a major portion of a lubricating oil; and the lubricating compositions so prepared may be found to possess superior properties.

The lubricating oils which may be treated by the process of this invention may include oils intended for use in automotive, railroad, marine, aircraft, etc; spark ignition or compression ignition; winter or summer; heavy duty or light duty; etc. The oil may be a hydrocarbon, ester, or silicone, etc. composition.

A typical lubricating oil in which the polymer of this invention may be present may be a standard SAE 5W-30 hydrocarbon motor oil having the following characteristics:

TABLE

| | | W% |
|---|---|---|
| -Solvent Neutral Oil | 100 sus | 80 |
| Kin. Visc. 40°C)cSt) | 20 | |
| 100°C(cSt) | 4,0 | |
| Pour Point (°F) | 0 to +10 | |
| (°C) | -18 to -12 | |
| -Viscosity Index Improver (ethylene-propylene copolymer) | | 11 |
| -Standard Additive Package | | 9 |
| Polyisobutyenyl ($\bar{M}_n$ 1290) succinimide (dispersant and anti-wear) | | |
| calcium sulfonate (detergent) | | |
| Zinc dithiophosphate (anti-wear) | | |
| di-nonyl diphenyl amine (anti-oxidant) | | |
| 4,4'-methylene-bis (2,6-dit-butyl phenol) (anti-wear) | | |
| poly ethyoxyphenol | | |

It is a feature of this invention that the novel polymer may serve as a multifunctional lube oil additive. When it is to be used as a dispersant supplement, it may be present in effective amount of 2-10 w%, say about 4.85 w%. When it is to be used as a viscosity index improver, it may be present in effective amount of 2-10 w%, say about 5 w%. When it is to be used as a pour point depressant, it may be present in amount of 0.005-2 w%, say about 0.5 w%.

When it is intended that the additive polymer serve to provide all of these functions, in whole or in part, the effective amount may be 0.005-5 w%, say about 0.7 w% based on total lubricating composition.

The ability of this polymer to serve as a dispersant additive may be measured by the Bench VC Test, in which the turbidity of an oil is measured after addition of synthetic blow-by.

When compared to the standards (Good, Fair, and Poor) of the Bench VC Test, lubricating oils containing the additives of this invention consistently show high performance characteristics to a degree surpassing control formulations.

The ability of this polymer to serve as a viscosity index improver may be measured by ASTM Test D-445. When so tested, the formulations of this invention consistently show improved performance when compared to e.g. underivatized maleic anhydride-methacrylate terpolymer.

It is also found that lubricating compositions containing the product of this invention are characterized by satisfactory (i.e. lowered) Pour Point when tested by ASTM Test D 97-79.

More importantly these formulations, when tested by the Ford Max Pour Point Test (as set forth at Ford Motor Co. Quality Laboratory and Chemical Engineering Physical Test Methods Required by Ford Engineering Specification ESEM 2C 35-F to 39-F), show an unexpected ability to maintain (or even to improve) the pour point during the course of this extended test to a degree not observed with prior art formulations.

It is also found that the Borderline Pumping Temperature (BPT) °C when determined by ASTM - D-3829 is equal to or better than comparable prior art lubricating oil compositions.

## DESCRIPTION OF SPECIFIC EMBODIMENTS

Practice of the process of this invention will be apparent to those skilled in the art from the following wherein, as elsewhere in this specification, all parts are parts by weight unless otherwise noted.

### EXAMPLE I

| Component | | Grams | Moles |
|---|---|---|---|
| -Maleic acid anhydride | | 4.95 | 0.51 |
| -Lauryl methacrylate | | 204.05 | 0.739 |
| -Alfol 1620 brand of stearyl methacrylate | | 43.75 | 0.134 |
| -Lauryl mercaptan (chain transfer agent) | | 0.25 | 0.124 |
| -145 P Pale Turbine Stock HF (solvent) | | 45.55 | ----- |
| -Azobisisobutyronitrile (AIBN) | First | 0.40 | 0.0014 |
| | Second | +0.09 | 0.0003 |
| -100E Pale Oil | | 199.3 | |

The first five components were added to a reaction vessel which was then blanketed with nitrogen and heated to 83°C. The sixth component (0.40 grams) was added and heating was continued until two consecutive identical refractive indices were obtained (3.5 hours). There were then added 0.09g of azobisisobutyronitrile and 199.30g of 100E Pale Oil. The temperature was raised to 100°C and maintained for one hour; the reaction mixture was cooled to room temperature.

Analysis of the terpolymer product show $\bar{M}_n$ of 81,000 and $\bar{M}_w$ of 183,000. Infrared analysis showed carbonyl stretching frequency of 1730 and 1790 $cm^{-1}$ which are characteristic respectively of the ester and the anhydride.

This corresponds to a product polymer

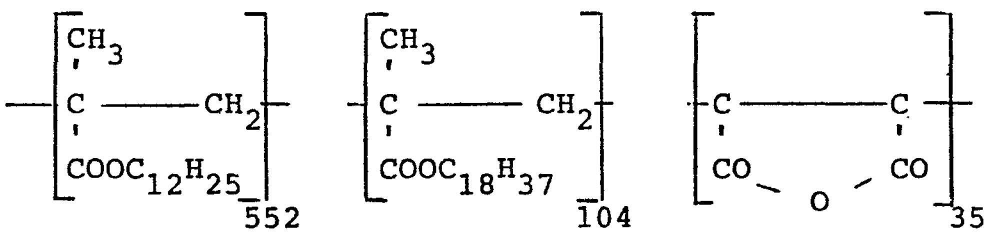

## EXAMPLE II

The product of Example I (400g of polymer) in 145 P Pale Turbine Stock and 100 E Pale Oil was added to a reaction vessel. After blanketing with nitrogen, there was added 3(N,N-dimethylamino) propylamine (15.3g, 0.15 moles). The temperature was then raised to 160°C and maintained at that level for 2.5 hours. One ml. of water was collected. The temperature was raised to 180°C for 3 hours; no further liquid was collected. The reaction mixture was cooled to room temperature.

Analysis showed loss of anhydride carbonyl stretch at 1790 $cm^{-1}$; but ester carbonyl stretching at 1730 $cm^{-1}$ was retained.

This corresponds to a product polymer

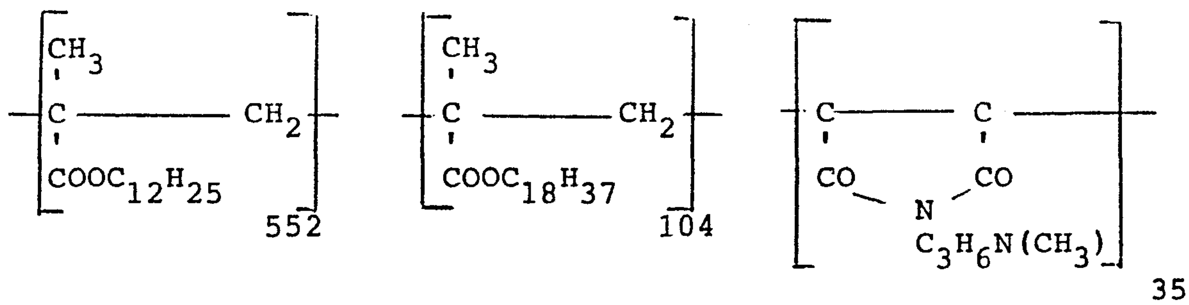

## EXAMPLE III

The base blend used in this example had the following composition:

### TABLE

| Component | W % |
|---|---|
| SNO-7 oil | 75.25 |
| SNO-20 oil | 21-74 |
| Zinc dithiophosphate (anti-wear) | 1.12 |
| Naugalube 438 brand of 4,4'-di-nonyl-di-phenyl amine (antioxidant) | 0.39 |
| Surchem 521 brand of magnesium sulfonate (detergent) | 1.50 |
| Silicone polymer (anti-foamant) | 150 ppm |

This base blend had the following properties:

TABLE

| Property | Value |
|---|---|
| Kinematic Viscosity | |
| cSt 40°C | 31.50 |
| 100°C | 5.36 |
| Pour Point °F (°C) | +5 (-15) |
| Ash (Sulfated) % | |
| (by ASTM D-874) | 0.93 |
| Phosphorus % X-ray | 0.11 |
| Sulfur % X-ray total | 0.40 |
| Zinc % X-ray | 0.12 |
| Magnesium % | 0.33 |
| Cold Cranking Simulator | |
| cP @ -18°C | 1660 |

The product of Example II (4.85 w% polymer) was blended into the above Base blend and evaluated in the Bench VC Test (BVCT) for dispersancy. The result (24.2 Rating) as compared to the BVCT standards (best 15.9, fair 47.6, worst 64.9) indicated that the composition of Example II is a high performance dispersant. (Underivatized maleic anhydride - methacrylate polymer gives an unsatisfactory BVCT of 99)

EXAMPLE IV-V*-VI*

In this series of Examples, the pour point depressant ability of the product of this invention was measured by:

(i) the Cold Cranking Simulator Test

(ii) Pour Point °F (°C) (by ASTM D-97-79):

(iii) Ford Max Pour Point (°F)(°C) by BJ20-1 Ford Motor Co. Quality Laboratory and Chemical Engineering Physical Test Methods.

(iv) Mini-Rotary Viscometer Test (MRV) by ASTM D-3829.

In each Example, the Base oil is a standard Peenzoil (Rouseville) 100 N (a SF/CC 5W-30 motor oil) containing a fully formulated commercial additive package, having the following properties:

TABLE

| Property | Value |
|---|---|
| Kin. Visc. (cSt) | |
| @40°C | 20.3 |
| @100°C | 4.14 |
| Pour Point (°F) (°C) | 5 (-15) |

In experimental Example IV, the formulation contained 79.24 parts of Base Oil and 0.50 parts of the product of Example II 8.76 parts of the Standard Additive Package infra and 11.5 parts of ethylene propylene copolymer VI improver.

In control Example V*, the formulation contained 79.44 parts of Base Oil, 11.5 parts of ethylene-propylene (viscosity index improver) 0.30 parts of a commercial poly (alkyl methacrylate) (pour point depressant), and 8.76 parts of a standard additive package containing:

| Component | W % |
|---|---|
| Polyisobutenyl ($\bar{M}_n$ 1290) succinimide (dispersant) | 4.4 |
| Calcium sulfonate (detergent) | 1.66 |
| Polyethoxy phenol | 0.05 |
| Zinc dithiophosphate | 1.15 |
| 4,4' methylene-bis (2,6-di-t-butyl phenol) (anti-oxidant) | 0.25 |
| Dinonylphenyl amine | 0.25 |
| Derivatized alkenyl succinic anhydride | 1.0 |
| Silicone antifoamant | 150 ppm |

In control Example VI*, the formulation contained 79.34 parts of Base Oil and 0.40 parts of Acryloid AC-156 (Rohm and Haas) brand of poly (alkyl methacrylate) - 70/30 Lauryl/Stearyl methacrylate ($\bar{M}_n$ 46,000), 11.5 parts of ethylene-propylene copolymer VI improver and 8.76 parts of Standard Additive package.

The polymer content of each formulation was 0.25 w%.

The results of the tests are as follows:

TABLE

| Test | Example IV | Example V* | Example VI* | Limits |
|---|---|---|---|---|
| Kinematic Viscosity (cSt) | | | | |
| 40°C | 67.3 | 67.2 | 64.7 | |
| 100°C | 11.45 | 11.52 | 11.55 | 9.3-12.5 |
| Cold Cranking Simulator | | | | |
| cp (-25°C) | 3350 | 3450 | 3350 | 3500 Max |
| Pour Point °F | -30 | -35 | -35 | -30 Max |
| (°C) | (-34.5) | (-37) | (-37) | (-34.5 Max) |
| Ford Max Pour °F | -35 | -20 | -25 | -30 Max |
| (°C) | (-37) | (-29) | (-31.5) | (-34.5 Max) |
| Mini-Rotary Viscometer | | | | |
| Borderline Pumping Temp.°C | -30.5 | -29.5 | -30.5 | -30 Max |
| Viscosity (Pas) -35°C | 101.2 | 92.3 | 87.3 | |
| -30°C | 26.6 | 39.1 | 28.3 | 30 Max |
| -25°C | 9.6 | 3.5 | 6.0 | |
| Yield Stress (Pa) -35°C | 35 | 175 | 140 | |
| -30°C | 0 | 0 | 0 | 105 Max |
| -25°C | 0 | 0 | 0 | |

From the above table, the following conclusions may be noted:

(i) the additive of Example II meets all the test specifications.

(ii) it is particularly characterized by a significantly better rating (of -35°F) (-37°C) on the Ford Max Pour Test.

(iii) it is highly rated by the Borderline Pumping Temperature (BPT) Test and in terms of the Viscosity and Yield Stress and it is particularly characterized by a lower BPT.

Results comparable to those of Example IV may be obtained if the first monomer of Example I is as follows:

TABLE

| Example | First Monomer |
|---|---|
| VII | lauryl methacrylate |
| VIII | isodecyl methacrylate |
| IX | butyl methacrylate |
| X | stearyl methacrylate |
| XI | methyl methacrylate |

Results comparable to those of Example IV may be obtained of the second monomer is as follows:

TABLE

| Example | Second Monomer |
|---|---|
| XII | itaconic anhydride |
| XIII | methyl maleic anhydride |
| XIV | maleic acid |
| XV | polyisobutyenyl ($\bar{M}_n$ 1290) succinic anhydride |
| XVI | ethyl maleic anhydride |

Results comparable to those of Example IV may be obtained if the amine is:

TABLE

| Example | Amine |
| --- | --- |
| XVII | N-(3-aminopropyl) morpholine |
| XVIII | 1-amino pyridine |
| XIX | N-(3-amino propyl) pyridine-2 -oxide |

EXAMPLE XX*

In this control Example, the product polymer of Example I of USP 4,359,325 (issued 16 November 1982 to Institute Francais du Petrole as assignee of F. Dawans et al) was subjected to a series of tests comparable to those run in Example IV with the product of Example II of this invention. The control product of that patent is an underivatized terpolymer formed from stearyl methacrylate, diisobutylene, and maleic anhydride ($\bar{M}_n$ of 10,200).

The ASTM D-97-79 Pour Point of Example XX* (in a test oil containing 0.5w% polymer) was -35°C. The Pour Point of the product of Example II (in the same oil containing only 0.24w% polymer) was -35°C.

In other tests, the product of Example II satisfactorily showed (i) Ford Max Pour of -37°C; (ii) MRV, BPT°C (ASTM D-3829) of -30.5; and (iii) BVCT Dispersancy of 24.2 (15.9/47.6/64.9).

From the above, it is apparent that the product of the instant invention is superior to the product of the reference in that the desired pour point was achieved in Example II using only half as much additive. The other data for the product of Example II show that the product is a good candidate.

CLAIMS:

1. A copolymer characterized in that it comprises

(A) 50 to 80 mol % of acrylic ester units having the formula

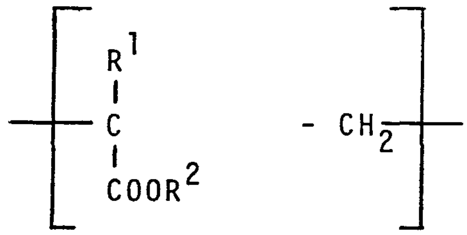

wherein $R^2$ is alkyl, aralkyl, alkaryl, cycloalkyl, or aryl and $R^1$ is hydrogen or is selected from the same group as $R^2$; and

(B) 5 to 40 mol % of dicarboxylic units having the formula

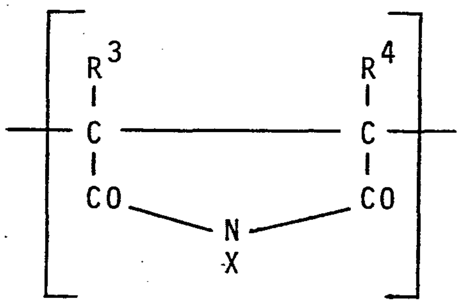

or

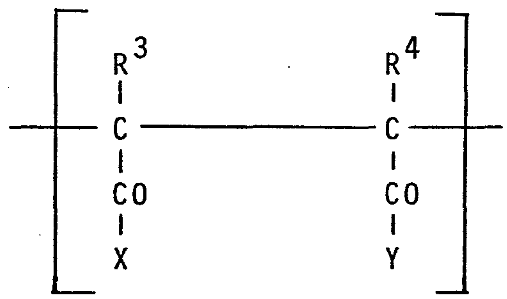

wherein X is $-R^5(NR^5)_aN(R^6)_2$ or $-(R^7)N(NR^5)_aN(R^6)_2$;

Y is X or -OH or $O^-$;

$R^3$ and $R^4$ and $R^6$ and $R^7$ are each hydrogen or selected from same group as $R^2$;

$R^5$ is alkylene, aralkylene, cycloalkylene, alkarylene, or arylene; and

<u>a</u> is 1 to 20.

2. A copolymer as claimed in Claim 1, characterized in that it contains supplemental monomer units (A') of the same formula as units (A), the $R^2$ group of said supplemental units (A') containing at least two carbon atoms more than the $R^2$ group of units (A).

3. A functionalized copolymer as claimed in Claim 2, characterized in that wherein said units (A) are derived from lauryl methacrylate and units (A') are derived from stearyl methacrylate.

4. A copolymer as claimed in any preceding Claim characterized in that the molecular weight $\bar{M}_n$ of said copolymer is 20,000 to 200,000.

5. A method of preparing a polymer according to Claim 1 characterized in that a first monomer of the formula

$$CH_2{=}\overset{R^1}{C} - COOR^2$$

is copolymerized with a second monomer of the formula

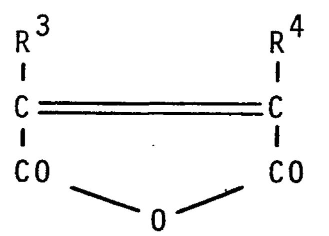

in the presence of free-radical polymerization initiator and the resulting copolymer is reacted with an amine of the formula $(R^7)_2NR^5(NR^5)_aN(R^6)_2$ wherein $R^1$, $R^2$, $R^3$, $R^4$, $R^5$, $R^6$, $R^7$ and a, have the meanings given in Claim 1.

6. A lubricating composition comprising

(i) a major portion of a lubricating oil; and

(ii) a minor effective portion of an additive, characterized in that said additive is a copolymer according to any of Claims 1 to 4.

7. A lubricating composition as claimed in Claim 6, characterized in that said effective portion is 0.005 to 5 wt. % of said lubricating composition.